# EUROPÄISCHE PATENTANMELDUNG

(11) **EP 4 465 478 A1**
(43) Veröffentlichungstag der Anmeldung: **20.11.2024**
(21) Anmeldenummer: 24174146.1
(22) Anmeldetag: 03.05.2024
(51) Int. Cl.: H02J 7/00, H02J 13/00, H02J 50/10, H02J 50/80

(54) **VERFAHREN ZUM BETREIBEN EINES SYSTEMS UND SYSTEM**

(30) Priorität: 19.05.2023 DE 102023113208
(71) Anmelder: E.G.O. Elektro-Gerätebau GmbH, 75038 Oberderdingen (DE)
(72) Erfinder: Egenter, Christian, 75015 Bretten (DE); Keidel, Benjamin, 76684 Östringen (DE); Calmbach, Stefan, 76646 Bruchsal (DE)
(74) Vertreter: Patentanwälte Ruff, Wilhelm, Beier, Dauster & Partner mbB

(57) **Zusammenfassung**

Verfahren zum Betreiben eines Systems aufweisend eine Vorrichtung (100) zum drahtlosen Übertragen von Energie in Richtung eines elektrischen Verbrauchers (200) mittels induktiver Kopplung und einen elektrischen Verbraucher (200),
- wobei die Vorrichtung (100) aufweist:
- einen aus einer Gleichspannung (Us) gespeisten Wechselrichter (102), der dazu ausgebildet ist, ein pulsweitenmoduliertes Ansteuersignal (As) zu erzeugen,
- eine mittels des pulsweitenmodulierten Ansteuersignals (A_{S}) angesteuerte Leistungsspule (101), mittels der zum Übertragen der Energie ein magnetisches Wechselfeld erzeugbar ist,
- eine Kommunikationseinrichtung (111), die dazu ausgebildet ist, Daten mit dem elektrischen Verbraucher (200) auszutauschen, und
- eine steuerbare Abschalteinrichtung (112), die dazu ausgebildet ist, bei einer Abschaltanforderung das pulsweitenmodulierte Ansteuersignal (As) abzuschalten,

- wobei der elektrische Verbraucher (200) aufweist:
- eine Kommunikationseinrichtung (206), die dazu ausgebildet ist, Daten mit der Vorrichtung (100) auszutauschen,

wobei das Verfahren die Schritte aufweist:
- Auslösen einer Abschaltanforderung durch den elektrischen Verbraucher (200),
- Überwachen im elektrischen Verbraucher (200), ob die Vorrichtung (100) das pulsweitenmodulierte Ansteuersignal (As) wie angefordert abschaltet oder nicht,
- Speichern des Ergebnisses des Überwachens, und
- Betreiben des elektrischen Verbrauchers (200) in Abhängigkeit vom Ergebnis des Überwachens.

## Beschreibung

Der Erfindung liegt die Aufgabe zugrunde, ein Verfahren zum Betreiben eines Systems, das eine Vorrichtung zum drahtlosen Übertragen von Energie in Richtung eines elektrischen Verbrauchers mittels induktiver Kopplung und einen elektrischen Verbraucher aufweist, und ein solches System zur Verfügung zu stellen, das eine möglichst hohe Betriebssicherheit aufweist.

Die Erfindung betrifft ein Verfahren zum Betreiben eines Systems, das eine Vorrichtung zum drahtlosen Übertragen von Energie in Richtung eines elektrischen Verbrauchers mittels induktiver Kopplung und einen elektrischen Verbraucher aufweist.

Das drahtlose Übertragen von Energie in Richtung des elektrischen Verbrauchers mittels induktiver Kopplung kann auch als Wireless Power Transfer, WPT, bezeichnet werden. Hinsichtlich der Grundlagen zu WPT sei auch auf die einschlägige Fachliteratur verwiesen. Bevorzugt werden die Vorrichtung und der elektrische Verbraucher gemäß dem WPC (Wireless Power Consortium) Ki (Cordless Kitchen) Verfahren betrieben. Die Vorrichtung kann auch als Transmitter bezeichnet werden und der elektrische Verbraucher kann als Receiver bezeichnet werden.

Die Vorrichtung weist auf: einen aus einer Gleichspannung gespeisten Wechselrichter, der dazu ausgebildet ist, ein pulsweitenmoduliertes Ansteuersignal zu erzeugen, eine mittels des pulsweitenmodulierten Ansteuersignals angesteuerte Leistungsspule, mittels der zum Übertragen der Energie ein magnetisches Wechselfeld erzeugbar ist, eine Kommunikationseinrichtung, die dazu ausgebildet ist, Daten mit dem elektrischen Verbraucher drahtlos auszutauschen, und eine steuerbare Abschalteinrichtung, die dazu ausgebildet ist, bei einer Abschaltanforderung das pulsweitenmodulierte Ansteuersignal sicher bzw. redundant abzuschalten.

Der elektrische Verbraucher weist eine Kommunikationseinrichtung auf, die dazu ausgebildet ist, Daten mit der Vorrichtung bzw. deren Kommunikationseinrichtung drahtlos auszutauschen.

Das Verfahren weist die Schritte auf: Auslösen einer Abschaltanforderung durch den elektrischen Verbraucher, anschließendes Überwachen im bzw. durch den elektrischen Verbraucher, ob die Vorrichtung das pulsweitenmodulierte Ansteuersignal wie angefordert abschaltet oder nicht, Speichern des Ergebnisses des Überwachens im bzw. durch den elektrischen Verbraucher, und Betreiben des elektrischen Verbrauchers in Abhängigkeit vom Ergebnis des Überwachens.

In einer Ausführungsform wird das Ergebnis des Überwachens nicht-flüchtig im elektrischen Verbraucher abgespeichert.

In einer Ausführungsform aktiviert der elektrische Verbraucher eine Fehlerbetriebsart, wenn die Vorrichtung das pulsweitenmodulierte Ansteuersignal nicht wie angefordert abschaltet.

In einer Ausführungsform fordert der elektrische Verbraucher während der aktivierten Fehlerbetriebsart keine elektrische Leistung bei der bzw. von der Vorrichtung an.

In einer Ausführungsform aktiviert der elektrische Verbraucher eine Normalbetriebsart, wenn die Vorrichtung das pulsweitenmodulierte Ansteuersignal wie angefordert abschaltet.

In einer Ausführungsform löst der elektrische Verbraucher die Abschaltanforderung aus, bevor er eine Leistungsübertragung von der Vorrichtung anfordert.

In einer Ausführungsform löst der elektrische Verbraucher die Abschaltanforderung aus, indem er die Kommunikation zu der Vorrichtung für eine vorgegebene Zeitdauer nicht bestimmungsgemäß durchführt, insbesondere unterbricht. Der elektrische Verbraucher kann die Kommunikation vollständig unterbrechen oder stattdessen lediglich ein beliebiges ungültiges Signal senden, beispielsweise einen sonst vorgesehenen CRC unterdrücken, d.h. die Kommunikation stören.

In einer Ausführungsform überträgt die Vorrichtung eine eindeutige Vorrichtungs-Kennung an den elektrischen Verbraucher, wobei der elektrische Verbraucher die Vorrichtungs-Kennung, insbesondere nicht-flüchtig, speichert, wenn die Vorrichtung das pulsweitenmodulierte Ansteuersignal wie angefordert abschaltet.

In einer Ausführungsform aktiviert der elektrische Verbraucher ohne das Auslösen einer Abschaltanforderung unmittelbar eine bzw. die Normalbetriebsart, wenn er von der Vorrichtung eine Vorrichtungs-Kennung empfängt, die er zuvor bereits abgespeichert hatte, d.h. deren Abschalteinrichtung wie gewünscht funktioniert.

In einer Ausführungsform überwacht der elektrische Verbraucher das ordnungsgemäße Abschalten mittels eigener Messmittel.

Die Vorrichtung und der elektrische Verbraucher des erfindungsgemäßen Systems sind jeweils dazu ausgebildet, ein Verfahren nach einem der vorhergehenden Ansprüche auszuführen.

In einer Ausführungsform schaltet die steuerbare Abschalteinrichtung bei einer Abschaltanforderung das pulsweitenmodulierte Ansteuersignal dadurch ab, dass ein Schaltzustandswechsel von Schaltmitteln des Wechselrichters verhindert wird, d.h. weist einen redundanten Abschaltpfad zum sicheren Abschalten auf.

In einer Ausführungsform weist der elektrische Verbraucher Messmittel auf, die dazu ausgebildet sind zu überwachen, ob die Vorrichtung das pulsweitenmodulierte Ansteuersignal wie angefordert abschaltet oder nicht. Beispielsweise kann ein einzelner Anschluss bzw. PIN, vorgesehen sein, der hochohmig abhängig von einer Frequenz des Ansteuersignals seinen Zustand wechselt, und folglich seinen Zustand beibehält, sobald das Ansteuersignal wie angefordert ordnungsgemäß abgeschaltet ist.

Die Erfindung wird nachfolgend detailliert unter Bezugnahme auf die Zeichnung beschrieben. Hierbei zeigt:

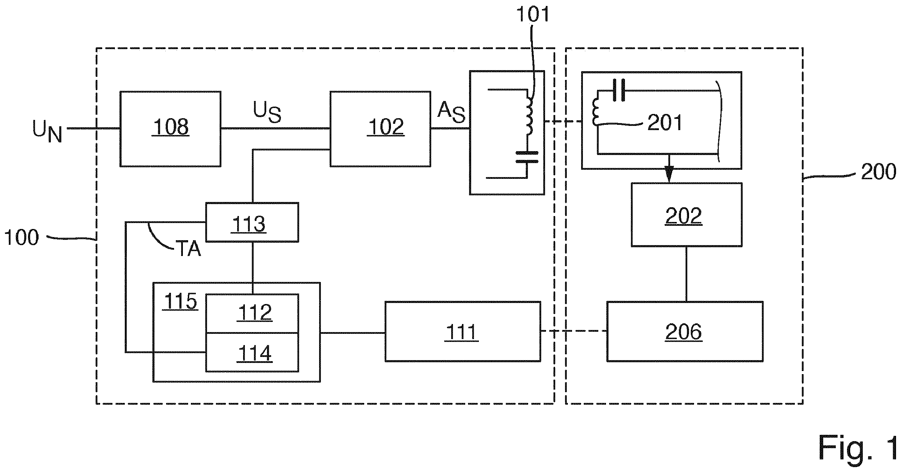

- Fig. 1: ein schematisches Blockschaltbild eines erfindungsgemäßen Systems mit einer Vorrichtung zum drahtlosen Übertragen von Energie in Richtung eines elektrischen Verbrauchers mittels induktiver Kopplung und einem elektrischen Verbraucher.

Fig. 1 zeigt ein schematisches Blockschaltbild eines Systems aufweisend eine Vorrichtung 100 zum drahtlosen Übertragen von Energie in Richtung eines elektrischen Verbrauchers 200 mittels induktiver Kopplung und einen elektrischen Verbraucher 200. Die Vorrichtung 100 und der elektrische Verbraucher werden grundsätzlich gemäß dem WPC (Wireless Power Consortium) Ki (Cordless Kitchen) Verfahren betrieben.

Die Vorrichtung 100 weist einen aus einer Gleichspannung Us gespeisten Wechselrichter 102 auf, der dazu ausgebildet ist, ein pulsweitenmoduliertes Ansteuersignal As zu erzeugen. Die Gleichspannung Us wird aus einer Netzwechselspannung U_{N} mittels eines Gleichrichters 108 erzeugt.

Die Vorrichtung 100 weist weiter eine mittels des pulsweitenmodulierten Ansteuersignals As angesteuerte Leistungsspule 101, mittels der zum Übertragen der Energie ein magnetisches Wechselfeld erzeugbar ist. Insoweit sei auch auf die einschlägige Fachliteratur verwiesen.

Die Vorrichtung 100 weist weiter eine Kommunikationseinrichtung 111, die dazu ausgebildet ist, Daten drahtlos mit dem elektrischen Verbraucher 200 auszutauschen.

Die Vorrichtung 100 weist weiter eine steuerbare Abschalteinrichtung 112 auf, die dazu ausgebildet ist, bei einer Abschaltanforderung das pulsweitenmodulierte Ansteuersignal As abzuschalten. Die Abschalteinrichtung 112 steuert hierzu Treiber 113, die nicht dargestellte Schaltmittel des Wechselrichters 102 ansteuern, derart an, dass die Schaltmittel ihren Zustand nicht verändern können.

Die Vorrichtung 100 weist weiter einen Leistungsregler 114 auf, der in Abhängigkeit von einer angeforderten Leistung ein Treiberansteuersignal TA erzeugt, das zur Ansteuerung der Schaltmittel des Wechselrichters 102 dient, wenn die Abschalteinrichtung 112 die Treiber 113 für den Fall einer Abschaltanforderung nicht momentan sperrt.

Die Vorrichtung 100 weist weiter eine Steuereinrichtung 115 auf, die den Betrieb der Vorrichtung 100 steuert, und bevorzugt unter anderem die Abschalteinrichtung 112 sowie den Leistungsregler 114 als funktionale Blöcke beinhaltet.

Der elektrische Verbraucher 200 weist ebenfalls eine Kommunikationseinrichtung 206 auf, die dazu ausgebildet ist, Daten mit der Vorrichtung 100 bzw. deren Kommunikationseinrichtung 111 drahtlos auszutauschen.

Der elektrische Verbraucher 200 weist weiter herkömmlich eine Empfangsspule 201 auf, die im Betrieb mit der Leistungsspule 101 magnetisch gekoppelt ist, und weitere herkömmliche nachgeschaltete Schaltungsteile auf. Insoweit sei auch auf die einschlägige Fachliteratur verwiesen.

Der elektrische Verbraucher 200 weist weiter eine Steuereinrichtung 202 auf, die den Betrieb des elektrischen Verbrauchers 200 steuert.

Erfindungsgemäß wird eine Abschaltanforderung durch den elektrischen Verbraucher 200 ausgelöst und nachfolgend im elektrischen Verbraucher 200 überwacht, ob die Vorrichtung 100 das pulsweitenmodulierte Ansteuersignal As wie angefordert abschaltet oder nicht. Der elektrische Verbraucher 200 speichert das Ergebnis des Überwachens nicht-flüchtig in einem dafür vorgesehenen Speicher des elektrischen Verbrauchers 200. Der elektrische Verbraucher 200 bzw. das gesamte System wird dann in Abhängigkeit vom Ergebnis des Überwachens betrieben.

Der elektrische Verbraucher 200 aktiviert eine Fehlerbetriebsart, wenn die Vorrichtung 100 das pulsweitenmodulierte Ansteuersignal As nicht wie angefordert abschaltet. Während der aktivierten Fehlerbetriebsart fordert der elektrische Verbraucher 200 keine elektrische Leistung bei der Vorrichtung 100 an. Der elektrische Verbraucher 200 aktiviert eine Normalbetriebsart, wenn die Vorrichtung 100 das pulsweitenmodulierte Ansteuersignal As wie angefordert abschaltet. Während der Normalbetriebsart fordert der elektrische Verbraucher 200 eine von ihm gewünschte elektrische Leistung bei der Vorrichtung 100 an.

Der elektrische Verbraucher 200 löst die Abschaltanforderung beispielsweise aus, bevor er erstmalig eine Leistungsübertragung von der Vorrichtung 100 anfordert. Hierzu kann der elektrische Verbraucher 200 beispielsweise eine Leistungsanforderung, vorzugsweise eine kleine Leistung von beispielsweise höchstens einem Zehntel seiner Nennleistung, vor dem eigentlichen Start der gewünschten Funktion bei der Vorrichtung 100 anfordern und die Abschaltung anfordern, sobald der elektrische Verbraucher 200, beispielsweise mittels einer geeigneten Messeinrichtung, die Übertragung von Leistung feststellt. Da dieser Ablauf typisch nur etwa 250 ms benötigt und dabei auch nur eine geringe Leistung übertragen wird, bleibt dieses Testen für einen Anwender unauffällig. Der elektrische Verbraucher 200 hat jedoch in Erfahrung gebracht, ob die Abschaltrichtung 112 in der Vorrichtung 100 implementiert ist und die Vorrichtung 100 ein zur Kommunikation redundantes Abschalten der Leistungsübertragung als Sicherheitsfunktion unterstützt. Dies ist insbesondere wichtig, wenn Vorrichtung 100 und elektrischer Verbraucher 200 unabhängig voneinander als interoperable Einheiten vertrieben werden sollen und ein nicht-proprietäres Übertragungs- und Kommunikationsverfahren wie der Ki-Standard verwendet wird. Bei zertifizierten Produkten kann die korrekte Implementierung der Abschalteinrichtung 112 überprüft werden, aber es kann nicht ausgeschlossen werden, dass nicht-zertifizierte Vorrichtungen 100 auf den Markt gelangen, bei denen die Abschalteinrichtung nicht implementiert ist.

Der elektrische Verbraucher 200 löst die Abschaltanforderung beispielsweise aus, indem er die Kommunikation zu der Vorrichtung 100 für eine vorgegebene Zeitdauer nicht wie vorgesehen durchführt, beispielsweise unterbricht.

Die Vorrichtung 100 überträgt eine Vorrichtungs-Kennung an den elektrischen Verbraucher 200, wobei der elektrische Verbraucher 200 die Vorrichtungs-Kennung nicht-flüchtig speichert, wenn die Vorrichtung 100 das pulsweitenmodulierte Ansteuersignal A_{S} wie angefordert abgeschaltet hat. Der elektrische Verbraucher 200 aktiviert in Folge ohne das Auslösen einer Abschaltanforderung unmittelbar die Normalbetriebsart, wenn er von der Vorrichtung 100 eine Vorrichtungs-Kennung empfängt, die er bereits abgespeichert hatte.

Wenn ein Schutzschalter, der im Fehlerfall eine Spannungsversorgung trennen soll, in dem elektrischen Verbraucher 200 angeordnet ist, besteht die Gefahr, dass der Strom durch die Empfängerspule 201 bei einer nicht unterbrochenen Anregung durch die Vorrichtung 100 aufrecht erhalten bleibt, wodurch sich eine Spannung durch eine (Streu-) Kapazität an den Kontakten des Schutzschalters aufbaut, die in Folge zu einem Überschlag führen kann. Falls die Funkenstrecke ausreichend Plasma ionisiert, bleibt die Durchschlagfestigkeit zwischen den Kontakten reduziert und es kann zu erneuten Funkenstrecken kommen. Anstatt die Sicherheit des elektrischen Verbrauchers zu gewährleisten, kann daher der Schutzschalter selbst zu einer Brandgefahr werden.

Aufgrund dieser Gefahr durch das Öffnen des Schutzschalters im elektrischen Verbraucher 200 ist eine Implementierung einer entsprechenden Schutzeinrichtung in der Vorrichtung 100 technisch vorteilhaft für das Gesamtsystem.

Befindet sich jedoch die Schutzeinrichtung für den elektrischen Verbraucher 200 in der Vorrichtung 100, muss insbesondere aus Interoperabilitätsgründen der elektrische Verbraucher 200 vor einer Leistungsanforderung sicher feststellen können, dass die Schutzeinrichtung bzw. Abschalteinrichtung 112 für einen Fehlerfall auch wirksam vorhanden ist. Daher überprüft der elektrische Verbraucher 200 erfindungsgemäß die ordnungsgemäße Funktion der Abschalteinrichtung 112 vor seinem eigentlichen Betrieb und geht nur dann in Betrieb, wenn die Überprüfung erfolgreich durchgeführt werden konnte.

## Patentansprüche

1. Verfahren zum Betreiben eines Systems aufweisend eine Vorrichtung (100) zum drahtlosen Übertragen von Energie in Richtung eines elektrischen Verbrauchers (200) mittels induktiver Kopplung und einen elektrischen Verbraucher (200),
- wobei die Vorrichtung (100) aufweist:
- einen aus einer Gleichspannung (Us) gespeisten Wechselrichter (102), der dazu ausgebildet ist, ein pulsweitenmoduliertes Ansteuersignal (As) zu erzeugen,
- eine mittels des pulsweitenmodulierten Ansteuersignals (A_{S}) angesteuerte Leistungsspule (101), mittels der zum Übertragen der Energie ein magnetisches Wechselfeld erzeugbar ist,
- eine Kommunikationseinrichtung (111), die dazu ausgebildet ist, Daten mit dem elektrischen Verbraucher (200) auszutauschen, und
- eine steuerbare Abschalteinrichtung (112), die dazu ausgebildet ist, bei einer Abschaltanforderung das pulsweitenmodulierte Ansteuersignal (As) abzuschalten,
- wobei der elektrische Verbraucher (200) aufweist:
- eine Kommunikationseinrichtung (206), die dazu ausgebildet ist, Daten mit der Vorrichtung (100) auszutauschen,
wobei das Verfahren die Schritte aufweist:
- Auslösen einer Abschaltanforderung durch den elektrischen Verbraucher (200),
- Überwachen im elektrischen Verbraucher (200), ob die Vorrichtung (100) das pulsweitenmodulierte Ansteuersignal (As) wie angefordert abschaltet oder nicht,
- Speichern des Ergebnisses des Überwachens, und
- Betreiben des elektrischen Verbrauchers (200) in Abhängigkeit vom Ergebnis des Überwachens.

2. Verfahren nach Anspruch 1, **dadurch gekennzeichnet, dass**
- das Ergebnis des Überwachens nicht-flüchtig im elektrischen Verbraucher (200) abgespeichert wird.

3. Verfahren nach einem der vorhergehenden Ansprüche, **dadurch gekennzeichnet, dass**
- der elektrische Verbraucher (200) eine Fehlerbetriebsart aktiviert, wenn die Vorrichtung (100) das pulsweitenmodulierte Ansteuersignal (As) nicht wie angefordert abschaltet.

4. Verfahren nach Anspruch 3, **dadurch gekennzeichnet, dass**
- der elektrische Verbraucher (200) während der aktivierten Fehlerbetriebsart keine elektrische Leistung bei der Vorrichtung (100) anfordert.

5. Verfahren nach einem der vorhergehenden Ansprüche, **dadurch gekennzeichnet, dass**
- der elektrische Verbraucher (200) eine Normalbetriebsart aktiviert, wenn die Vorrichtung (100) das pulsweitenmodulierte Ansteuersignal (As) wie angefordert abschaltet.

6. Verfahren nach einem der vorhergehenden Ansprüche, **dadurch gekennzeichnet, dass**
- der elektrische Verbraucher (200) die Abschaltanforderung auslöst, bevor er eine Leistungsübertragung von der Vorrichtung (100) anfordert.

7. Verfahren nach einem der vorhergehenden Ansprüche, **dadurch gekennzeichnet, dass**
- der elektrische Verbraucher (200) die Abschaltanforderung auslöst, indem er die Kommunikation zu der Vorrichtung (100) für eine vorgegebene Zeitdauer nicht wie vorgesehen durchführt, insbesondere unterbricht.

8. Verfahren nach einem der vorhergehenden Ansprüche, **dadurch gekennzeichnet, dass**
- die Vorrichtung (100) eine Vorrichtungs-Kennung an den elektrischen Verbraucher (200) übertragt, wobei der elektrische Verbraucher (200) die Vorrichtungs-Kennung, insbesondere nicht-flüchtig, speichert, wenn die Vorrichtung (100) das pulsweitenmodulierte Ansteuersignal (A_{S}) wie angefordert abschaltet.

9. Verfahren nach Anspruch 8, **dadurch gekennzeichnet, dass**
- der elektrische Verbraucher (200) ohne das Auslösen einer Abschaltanforderung unmittelbar eine Normalbetriebsart aktiviert, wenn er von der Vorrichtung (100) eine Vorrichtungs-Kennung empfängt, die er bereits abgespeichert hatte.

10. Verfahren nach einem der vorhergehenden Ansprüche, **dadurch gekennzeichnet, dass**
- das Überwachen im elektrischen Verbraucher (200), ob die Vorrichtung (100) das pulsweitenmodulierte Ansteuersignal (As) wie angefordert abschaltet oder nicht, basierend auf im elektrischen Verbraucher (200) ausgeführten Messungen erfolgt.

11. System, aufweisend:
- eine Vorrichtung (100) zum drahtlosen Übertragen von Energie in Richtung eines elektrischen Verbrauchers (200) mittels induktiver Kopplung, und
- einen elektrischen Verbraucher (200),
- wobei die Vorrichtung (100) aufweist:
- einen aus einer Gleichspannung (Us) gespeisten Wechselrichter (102), der dazu ausgebildet ist, ein pulsweitenmoduliertes Ansteuersignal (As) zu erzeugen,
- eine mittels des pulsweitenmodulierten Ansteuersignals (A_{S}) angesteuerte Leistungsspule (101), mittels der zum Übertragen der Energie ein magnetisches Wechselfeld erzeugbar ist,
- eine Kommunikationseinrichtung (111), die dazu ausgebildet ist, Daten mit dem elektrischen Verbraucher (200) auszutauschen, und
- eine steuerbare Abschalteinrichtung (112), die dazu ausgebildet ist, bei einer Abschaltanforderung das pulsweitenmodulierte Ansteuersignal (As) abzuschalten,
- wobei der elektrische Verbraucher (200) aufweist:
- eine Kommunikationseinrichtung (206), die dazu ausgebildet ist, Daten mit der Vorrichtung (100) auszutauschen, und
- wobei die Vorrichtung (100) und der elektrische Verbraucher (200) dazu ausgebildet sind, ein Verfahren nach einem der vorhergehenden Ansprüche auszuführen.

12. System nach Anspruch 11, **dadurch gekennzeichnet, dass**
- die steuerbare Abschalteinrichtung (112) bei einer Abschaltanforderung das pulsweitenmodulierte Ansteuersignal (AS) dadurch abschaltet, dass ein Schaltzustandswechsel von Schaltmitteln des Wechselrichters (102) verhindert wird.

13. System nach Anspruch 11 oder 12, **dadurch gekennzeichnet, dass**
- der elektrische Verbraucher (200) Messmittel aufweist, die dazu ausgebildet sind zu überwachen, ob die Vorrichtung (100) das pulsweitenmodulierte Ansteuersignal (As) wie angefordert abschaltet oder nicht.
